# EUROPEAN PATENT APPLICATION

(11) **EP 1 624 687 A2**
(43) Date of publication of application: **08.02.2006**
(21) Application number: 05106970.6
(22) Date of filing: 28.07.2005
(51) Int. Cl.: H04N 7/15

(54) **Foveated panoramic camera system**

(30) Priority: 28.07.2004 US 902675; 30.12.2004 US 27068
(71) Applicant: MICROSOFT CORPORATION, Redmond, Washington 98052-6399 (US)
(72) Inventor: Cutler, Ross G., 98052, Redmond (US)
(74) Representative: Grünecker, Kinkeldey, Stockmair & Schwanhäusser Anwaltssozietät

(57) **Abstract**

A foveated panoramic camera system includes multiple cameras oriented so that individual images captured by the cameras can be combined to form a panoramic image. Each of the cameras includes a lens having a focal length that corresponds to a field of view for the camera. A field of view for a camera overlaps with the field(s) of view of each adjacent camera. At least one of the cameras has a field of view that differs from fields of view of other cameras for capturing images that are situated at a greater distance from the camera system than are images captured by the other cameras. As a result, a more uniform resolution is achieved across all images captured by the multiple cameras. A mirror assembly is utilized to reflect object images into the multiple cameras to achieve a near center of projection for the camera system.

## Description

### CROSS-REFERENCE(S) TO RELATED APPLICATIONS

This application is a continuation-in-part of U.S. Patent Application Number 10/608,363, entitled "Omni-Directional Camera Design For Video Conferencing", filed 06/26/2003 by the present inventor and assigned to Microsoft Corp., the assignee of the present application. Priority is claimed to said application which is hereby incorporated by reference for all that it teaches and discloses.

This application is also a continuation-in-part of U.S. Patent Application Number 10/902,675, entitled "Omni-Directional Camera With Calibration And Up Look Angle Improvements", filed 07/28/2004 by the present inventor and assigned to Microsoft Corp., the assignee of the present application. Priority is claimed to said application which is hereby incorporated by reference for all that it teaches and discloses.

### TECHNICAL FIELD

The following description relates generally to image processing. More particularly, the following description relates to panoramic camera systems and foveated camera technology.

### BACKGROUND

Panoramic images are wide-angle camera images that span) up to three hundred and sixty degrees (360°). Panoramic images can be recorded with cameras having special lenses, by sweeping a camera across a scene or by combining images from multiple cameras into a single panoramic image. Special wide-angle lenses are very expensive and, as such, are not available for many applications. Sweeping a camera across a scene does not capture then entire scene at the same instance. Combining images from multiple cameras creates a distortion due to a lack of common center of projection between the multiple cameras.

Panoramic video camera devices are especially useful in a conference room scenario. A single panoramic video camera can capture conference participants over a wide span of the conference room so that a viewer can see most or all of the conference participants simultaneously. A panoramic video camera device that can capture a three hundred and sixty degree (360°) view of the conference room can image all conference participants. However, problems can arise due to conference participants being situated at different distances from such a device.

### BRIEF DESCRIPTION OF THE DRAWINGS

The foregoing aspects and many of the attendant advantages of this invention will become more readily appreciated as the same become better understood by reference to the following detailed description, when taken in conjunction with the accompanying drawings, wherein:
Figure 1 is a depiction of an exemplary foveated panoramic camera system in accordance with the present description.
Figure 2 depicts a diagram of an exemplary lens configuration of a three hundred and sixty degree (360°) panoramic camera configuration oriented with respect to a rectangular table.
Figure 3 illustrates an exemplary foveated panoramic camera configuration in accordance with the present description.
Figure 4 is a block diagram of an exemplary system in accordance with the description provided herein.

### DETAILED DESCRIPTION

A panoramic camera device is described herein that utilizes multiple cameras to capture a panoramic image of up to three hundred and sixty degrees (360°). The panoramic camera device provides a foveated panoramic image. As used herein, foveated refers to at least one of the multiple cameras being configured to capture an image at a higher pixel density than images captured by one or more of the other multiple cameras in the panoramic camera device.

It is desirable to achieve at least forty (40) pixels across a face of each person seated around a conference room table. If all cameras in a multi-camera panoramic device have an identical focal length, then to achieve a desirable resolution for an image of a person seated at a far edge (i.e. an end) of a rectangular table, more than sufficient resolution is achieved for persons seated at a side (or near edge) of the table. This incurs unnecessary additional expense in constructing the multi-camera panoramic device.

In one or more of the examples presented herein, a panoramic camera device is configured to be situated on a conference room table that has one or more sides located farther from the panoramic camera device than one or more other sides of the conference room table. Individual cameras that are oriented toward sides of the table that are farther away include lenses having a longer focal length than do lenses of cameras that are oriented toward sides of the table that are closer to the panoramic camera device. As a result, a higher resolution is achieved at far ends of a table than at near ends of the table.

Although some cameras achieve a lower resolution than other cameras, such cameras image objects (persons) closer to the camera. As a result, a uniform resolution is achieved around the table which allows a more efficient allocation of pixels for the panoramic image. In addition, greater cost efficiency is achieved by utilizing a foveated camera design.

In the present description, cameras are described with reference to fields of view associated with the cameras. A smaller (or narrower) field of view corresponds to a longer focal length and a higher resolution. Conversely, a larger (or wider) field of view corresponds to a shorter focal length and a lower resolution.

The field of view of any one camera overlaps slightly with the field of view of each camera adjacent to the one camera. This provides greater accuracy when individual images are "stitched" together to form a panoramic image.

Such a stitching process is described in U.S. Patent Application No. 10/262,292 entitled "Foveated Wide-Angle Imaging System And Method For Capturing And Viewing Wide-Angle Images In Real Time", filed 09/30/2002 by Zicheng Liu and Michael Cohen and assigned to Microsoft Corp., the assignee of the present application. Said application is hereby incorporated by reference for all that it teaches and discloses.

In addition to the stitching system disclosed in the aforementioned application, said application also describes a real-time wide-angle image correction system that utilizes a warping function to process a stitch table to correct distortion and perception problems present in a preliminary foveated wide-angle image. Such an image correction system may also be used with the concepts outlined herein.

### Exemplary Photographic Device

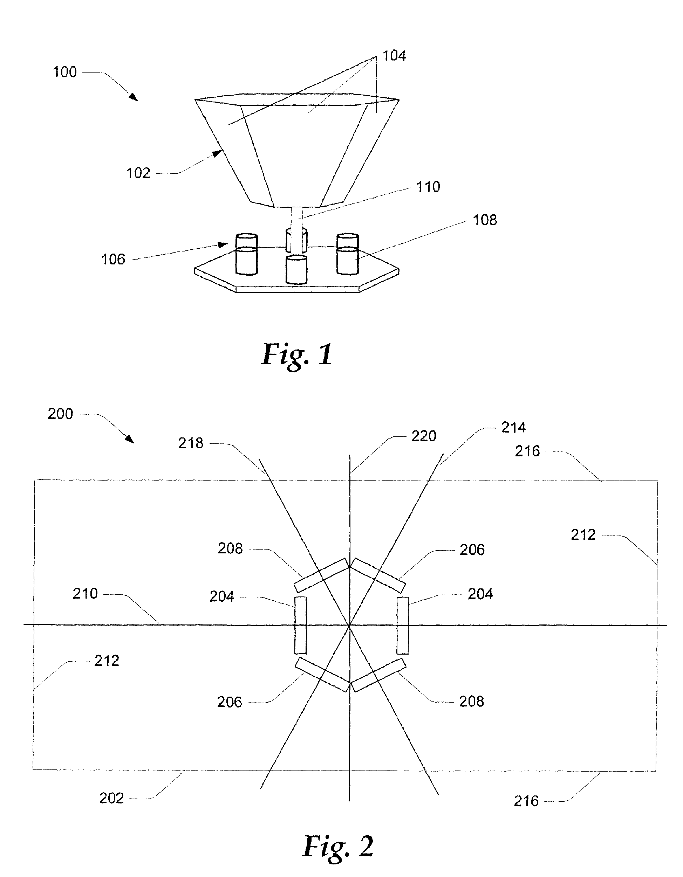

Fig. 1 is a depiction of an exemplary foveated panoramic camera system 100 in accordance with the present description. It is noted that the exemplary foveated panoramic camera system 100 is but one example of a camera configuration that can be utilized in the context of the present description. Any multi-camera system configured to capture a panoramic image greater than one hundred and eighty degrees (180°) can be used according to the concepts of foveated design outlined herein.

The exemplary foveated panoramic camera 100 includes a mirror assembly 102 that includes multiple mirror facets 104. Although other configurations may be used, the mirror assembly 102 example shown in Fig. 1 comprises an inverted pyramidal configuration. Additionally, although the mirror assembly 102 shown includes six (6) mirror facets 104, other implementations may include more or less mirror facets.

The mirror assembly 102 is disposed over a lens assembly 106 that includes multiple individual cameras 108. There is one individual camera 108 corresponding to each mirror facet 104. A mirror facet 104 reflects light waves from objects into a corresponding individual camera 108, which then focuses the light waves on one or more imaging sensors (not shown). The mirror assembly 102 is supported over the lens assembly 106 by a support column 110.

The particular configuration of the exemplary foveated panoramic camera system 100 achieves a near center of projection, which reduces parallax errors in images produced by the camera system 100.

As will be discussed in greater detail below, each individual camera 108 includes a camera lens (not shown). A camera lens has a focal length associated therewith. Certain properties of a camera lens (e.g. size and thickness) affect the focal length. A particular focal length is associated with an angular resolution that is achieved with the lens and with a field of view captured by the lens. A longer focal length achieves a higher angular resolution but captures a smaller field of view. A shorter focal length achieves a lower angular resolution but captures a wider field of view.

### Exemplary Lens Configuration

Fig. 2 depicts a diagram of an exemplary lens configuration 200 of a three hundred and sixty degree (360°) panoramic camera configuration oriented with respect to a rectangular table 202. The exemplary lens configuration 200 includes several lenses 204 - 208.

Two long lenses 204 are situated opposite each other, i.e. the lenses 204 face in opposite directions. The two long lenses 204 are parallel to a long axis 210 of the rectangular table 202 so that each lens faces a distant end 212 of the table 202. The two long lenses 204 have a focal length that provides sufficient resolution of a face of a person sitting at a distant end 212 of the table, for example, approximately forty (40) pixels across the face.

A first pair of wide lenses 206 are situated opposite and facing away from each other along a first wide axis 214 that runs in a non-perpendicular fashion between two near sides 216 of the rectangular table 202. A second pair of wide lenses 208 are situated opposite and facing away from each other along a second wide axis 218 that runs in a non-perpendicular fashion between the near sides 216 of the rectangular table 202.

The first pair of wide lenses 206 and the second pair of wide lenses 208 are symmetrical about a short axis 220 of the rectangular table 202 that extends from a center of one near side 216 of the table 202 through a center (not shown) of the table 202 and through a center of the other near side 216 of the table 202.

The two long lenses 204 have a focal length sufficient to achieve a resolution of approximately (40) pixels across a face of a person (not shown) seated at a distant end 212 of the rectangular table 202. Although not required, in the present example such focal lengths would be identical since each of the long lenses 204 is situated an identical distance from the respective distant ends 212 of the rectangular table 202.

Each wide lens 206 in the first pair of wide lenses 206 has a focal point sufficient to achieve a resolution of approximately forty (40) pixels across a face of a person seated at a near side 216 of the rectangular table 202. Although not required, in the present example such focal lengths would be identical since each of the first pair of wide lenses 206 is situated a similar distance from the respective near sides 216 of the rectangular table 202.

Although four wide lenses 206, 208 are shown in the present example, it is noted that only one pair of wide lenses may be used according to the techniques described herein. In such a configuration, each wide lens would face a different near side 216 of the rectangular table 202. However, the cost of a camera lens increases significantly when a field of view of the camera lens exceeds approximately seventy-five degrees (75°). If only two wide lenses are utilized, the field of view of the lenses would have to be greater than 75°; therefore, it may be more cost efficient to utilize a configuration that includes at least four wide lenses as described above.

It is also noted that only one or more than two long lenses 204 may be used in a particular configuration. Additionally, more than four wide lenses 206 may also be used. Any combination of three or more cameras/lenses having different focal lengths and an aggregate field of view of greater than one hundred and eighty degrees (180°) may be used in compliance with the description set forth herein.

A number of unique focal lengths may be integrated into a single device. Although implementations are shown and described herein as having two (2) unique focal lengths, any practicable number of unique focal lengths may be incorporated. Devices may incorporate lenses having three, four or more unique focal lengths.

Generally, the shape of a table or a room in which a camera will be used dictates which focal lengths and combinations of lenses will be implemented.

### Exemplary Foveated Panoramic Camera Configuration

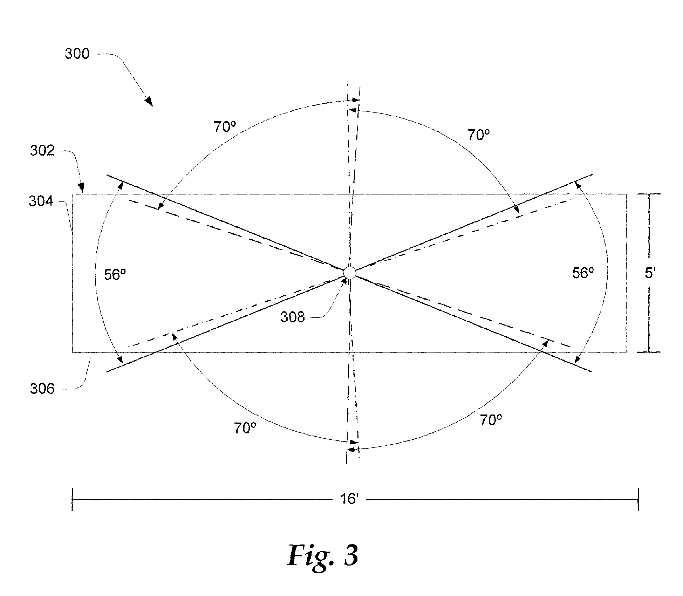

Fig. 3 illustrates an exemplary foveated panoramic camera configuration ("configuration") 300 in accordance with the present description. The exemplary configuration 300 is shown by way of example only. Any measurements shown and/or described in relation to the exemplary configuration 300 are shown and/or described for demonstration purposes only and are not meant to suggest any limitations or particularly

### preferred embodiments.

The exemplary configuration 300 includes a rectangular table 302 having two ends 304 and two sides 306. Each end 302 is five feet long and each side 304 is sixteen feet long. The exemplary configuration 300 also includes a foveated panoramic camera system 308 that includes six (6) lenses (not shown) arranged similarly to that shown and described in Fig. 1 and Fig. 2.

Six (6) fields of view are associated with the foveated panoramic camera system 308, there being one field of view corresponding to each lens. As shown in Fig. 3, the system 308 includes two fields of view of fifty-six degrees (56°) each and four fields of view of seventy degrees (70°) each.

The two fields of view of fifty-six degrees (56°) are oriented toward respective ends 304 of the rectangular table 302. As previously described, the fifty-six degree (56°) fields of view correspond to a focal length that provides a resolution of approximately forty (40) pixels across a face of a person situated at an end 304 of the table 302.

The four fields of view of seventy degrees (70°) are oriented toward respective sides 306 of the rectangular table 302. The seventy degree (70°) fields of view correspond to a focal length that provides a resolution of approximately forty (40) pixels across a face of a person situated at a side 306 of the table 302.

A approximately uniform resolution is thereby realized around the perimeter of the rectangular table 302. Other techniques - such as non-cylindrical panoramas - may be used with those described herein to provide an even greater uniformity of resolution around a table. As a result, a size of an image of a face of a person seated at an end 304 of the table 302 will be about the same size of an image of a face of a person seated at a side 306 of the table 302.

It is noted that each field of view overlaps any adjacent field of view. As will be described in greater detail below, providing individual images that overlap slightly allows greater flexibility in a stitching process that assembles a panoramic image from the individual images. This overlap can vary but is typically an overlap of at least one-half of one degree (0.5°). In the example shown in Fig. 3, an aggregate field of view is three hundred and ninety-two degrees (392°), which is thirty-two degrees (32°) more than required for a three hundred and sixty degree (360°) image. Therefore, the average overlap between each pair of adjacent fields of view is five and one-third degrees (5.33°).

Although not required, a number of unique focal lengths may correspond with a number of major axes of a table on which a camera device is situation. For instance, in the present example, the rectangular table has two axes, a long axis and a short axis. The number of focal lengths shown in the present example is two. A one-to-one correspondence between a number of table axes and a number of unique focal lengths may provide an optimum implementation.

### Exemplary System

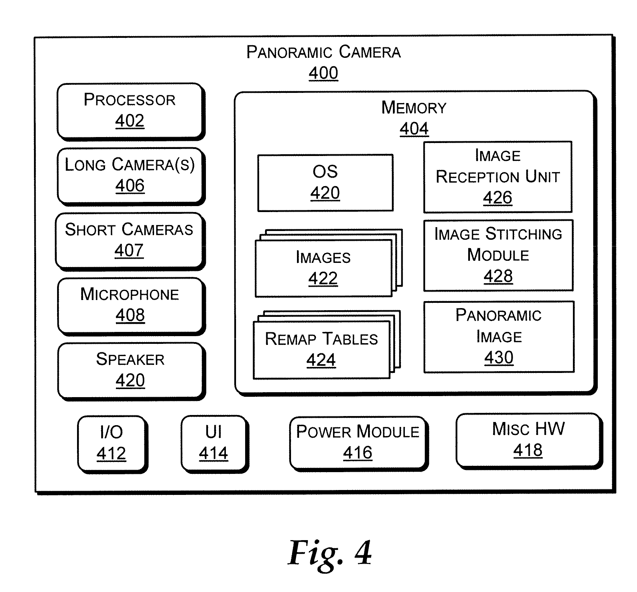

Fig. 4 is a block diagram of an exemplary system 400 in accordance with the description provided herein. In the following discussion, continuing reference is made to elements and reference numerals shown and described in previous figures.

The exemplary system 400 includes a processor 402 and memory 404. At least one long camera 406 and at least two short cameras 407 are included in the exemplary system 400. The term "long camera" refers to a camera having a longer focal length, a higher resolution and a smaller field of view relative to a "short camera." In this regard and with reference to the example shown in Fig. 3, the fifty-six degree (56°) fields of view can be said to be associated with "long" cameras and the seventy degree (70°) fields of view can be said to be associated with "short" cameras.

The exemplary system 400 is shown having one or more microphones 408, one or more speakers 410, an input/output (I/O) module 412 and a user interface 414 that may include user operable controls and displays. A power module 416 provides electrical power to the system 400 and its components, and other miscellaneous hardware 418 that may be required to perform some of the functionality described herein.

The memory 404 stores an operating system 420 that includes processor-executable instructions for carrying out operational functionality for the system 400 and its components. Multiple images 422 detected by the cameras 406, 407 are stored in the memory 404.

One or more remapping tables 424 are also stored in the memory 404 and are utilized by an image reception unit 426 and an image stitching module 428 to determine a correct mapping of individual images 422 from image space into a panoramic space to create a panoramic image 430. Details of one or more remapping techniques are described in U.S. Patent Application No. 10/262,292 which has previously been incorporated herein by reference.

### Conclusion

While one or more exemplary implementations have been illustrated and described, it will be appreciated that various changes can be made therein without departing from the spirit and scope of the claims appended hereto.

## Claims

1. A camera system, comprising:
at least one first camera lens having a first focal length corresponding to a first field of view;
a plurality of second camera lenses having a second focal length corresponding to a second field of view, the first field of view being less than the second field of view; and
wherein an aggregate field of view of the at least one first camera lens and the plurality of second camera lenses is greater than one hundred and eighty degrees (180°).

2. The camera system as recited in claim 1, wherein the plurality of second camera lenses further comprises a plurality of pairs of second camera lenses.

3. The camera system as recited in claim 2, wherein the plurality of pairs of second camera lenses further comprises two pairs of second camera lenses.

4. The camera system as recited in claim 3, wherein each of the two pairs of second camera lenses further comprise two camera lenses oriented in opposite positions.

5. The camera system as recited in claim 1, further comprising:
an image reception unit configured to receive image inputs from the at least one first camera lens and the plurality of second camera lenses; and
an image stitching module configured to assemble images received by the image reception unit into a panoramic image.

6. The camera system as recited in claim 5, wherein:
the panoramic image spans a three hundred and sixty degrees (360°) view; and
the aggregate field of view is greater than hundred and sixty degrees (360°).

7. The camera system as recited in claim 5, wherein:
the panoramic image has a view span of greater than one hundred and eighty degrees (180°); and
the aggregate field of view is greater than the panoramic image view span.

8. The camera system as recited in claim 1, wherein the at least one first camera lens further comprises two first camera lenses, each first camera lens being oriented opposite the other first camera lens.

9. The camera system as recited in claim 8, wherein the plurality of second camera lenses further comprises two pairs of second camera lenses.

10. The camera system as recited in claim 1, further comprising a mirror assembly having a mirror facet corresponding to each camera lens, each mirror facet being configured to reflect object images to the corresponding camera lens.

11. A panoramic camera system for capturing a wide-angle image of greater than one hundred and eighty degrees (180°), comprising:
one or more first cameras each having a first field of view;
at least two second cameras each having a second field of view;
wherein:
each field of view overlaps at least one other field of view; and
an aggregate field of view derived from combining the first fields of view and the second fields of view is equal to the wide-angle image plus the amount of overlap of the fields of view.

12. The panoramic camera system as recited in claim 11, wherein:
the one or more first cameras further comprises two first cameras oriented in opposite positions; and
the at least two second cameras further comprises one or more pairs of second cameras, each pair of second cameras being oriented in opposite positions.

13. The panoramic camera system as recited in claim 12, wherein the one or more pairs of second cameras further comprises two pairs of second cameras.

14. The panoramic camera system as recited in claim 11, further comprising an image stitching module configured to assemble individual images recorded by the first cameras and the second cameras to create the wide-angle image.

15. The panoramic camera system as recited in claim 11, further comprising a mirror assembly having a mirror facet corresponding to each of the first and second cameras, wherein the first and second cameras are configured to record images reflected by respective corresponding mirror facets.

16. The panoramic camera system as recited in claim 11, wherein each of the first and second fields of view further comprises a field of view of less than seventy-five degrees (75°).

17. A camera system, comprising:
at least a pair of first cameras each having a first field of view;
at least a pair of second cameras each having a second field of view that is greater than the first field of view;
a stitching module configured to combine an image from each of the first and second cameras to form a three hundred and sixty degree (360°) panoramic image; and
wherein each field of view overlaps at least one other field of view.

18. The camera system as recited in claim 17, wherein each pair of first cameras and each pair of second cameras includes two cameras that are oriented in opposite directions.

19. The camera system as recited in claim 17, wherein each first field of view and each second field of view further comprises a field of view of less than seventy-five degrees (75°).

20. The camera system as recited in claim 17, further comprising multiple mirror facets disposed in relation to the first cameras and the second cameras so as to reflect object images that are imaged by the first cameras and the second cameras.
